# FASCICULE DE BREVET EUROPEEN

(11) **EP 1 277 030 B1**
(45) Date de publication et mention de la délivrance du brevet: **06.08.2008**
(21) Numéro de dépôt: 01945008.9
(22) Date de dépôt: 13.04.2001
(51) Int. Cl.: G01D 5/14, G01P 3/487

(54) **CONNECTEUR A CONCENTRATEUR DE FLUX POUR MOTEUR ELECTRIQUE**
MAGNETFLUSS-KONZENTRIERENDER VERBINDER FÜR ELEKTRISCHE MOTOREN
MAGNETIC CURRENT CONCENTRATING CONNECTOR FOR ELECTRIC MOTOR

(30) Priorité: 14.04.2000 FR 0004870
(43) Date de publication de la demande: 22.01.2003
(73) Titulaire: ArvinMeritor Light Vehicle Systems-France, 45600 Sully sur Loire (FR)
(72) Inventeur: BREYNAERT, François, F-14000 Caen (FR); LAURANDEL, Hervé, F-14200 Herouville Saint Clair (FR); QUERE, Jérôme, F-14112 Bieville Beuville (FR); SENECAL, Didier, F-14830 Langrume/Mer (FR)
(74) Mandataire: Hirsch & Associés
(86) Numéro de dépôt international: PCT/EP2001/004333
(87) Numéro de publication internationale: WO 2001/079787

(56) Documents cités:
- WO-A-98/27640
- WO-A-99/13341
- DE-A- 4 218 793

## Description

La présente invention concerne le domaine des moteurs électriques, en particulier des motoréducteurs pour accessoires de véhicules automobiles, qui sont utilisés par exemple dans des systèmes de lève-vitre, d'actionnement de siège ou de toit-ouvrant.

L'invention vise plus précisément un connecteur pour moteur électrique, ledit moteur comportant un anneau magnétique qui est le siège d'un champ magnétique lié a des paramètres de fonctionnement du moteur.

Les moteurs ou motoréducteurs auxquels s'appliquent l'invention sont associés à un système de commande utilisant des paramètres de vitesse et/ou de position du moteur. Ces paramètres sont fournis au système de commande par un capteur à effet Hall associé à l'anneau magnétique, lequel est adapté pour délivrer au capteur un champ magnétique dépendant de la vitesse et/ou de la Position de l'arbre moteur.

Généralement, les dispositifs électroniques de commande de tels moteurs ou motoréducteurs comportent une carte électronique solidaire du carter du moteur, ladite carte comprenant des connexions d'alimentation électrique du moteur et le capteur à effet Hall. Ce capteur est fixé sur une partie de carte formée d'une bande rigide pénétrant dans le carter du moteur jusque dans une zone voisine de l'anneau magnétique, de façon que le capteur soit placé au voisinage dudit anneau.

On comprend que la présence d'un tel module électronique de commande sur le carter du moteur soit incompatible avec un haut degré de standardisation des moteurs, puisqu'une telle configuration du moteur et de son carter ne convient pas à une application dans laquelle le capteur de vitesse et/ou de position est supprimé, et dans laquelle le dispositif électronique de commande du moteur est déporté à distance du moteur.

Un but principal de l'invention est de remédier à cet inconvénient, et de proposer un connecteur pour moteur électrique, qui permette de transporter une information de type magnétique vers un dispositif de traitement électronique, et susceptible d'associer à cette fonction les fonctions classiques d'alimentation électrique du moteur.

Dans ce but, un connecteur suivant l'invention comporte au moins un organe de conduction de flux magnétique formant concentrateur de flux interposé, lorsque le connecteur est fixé sur le moteur, entre l'anneau magnétique et un capteur à effet Hall adapté pour mesurer le flux magnétique conduit par l'organe de conduction de flux magnétique.

Selon une variante, l'organe de conduction de flux magnétique présente une partie allongée, une extrémité de la partie allongée présentant une section inférieure à la section moyenne de la partie allongée, voisine du capteur à effet Hall.

Selon une autre variante, la section de ladite extrémité décroît régulièrement au voisinage du capteur à effet Hall.

Selon encore une variante, la partie allongée de l'organe de conduction de flux magnétique est réalisée en acier doux.

Suivant d'autres caractéristiques de l'invention :
- l'organe de conduction de flux magnétique comporte au moins une broche métallique adaptée pour qu'une partie de ladite broche, lorsque le connecteur est fixé sur le moteur, s'étende au voisinage de l'anneau magnétique ;
- l'organe de conduction de flux magnétique comporte deux broches métalliques dont les extrémités libres sont disposées symétriquement par rapport à un plan axial de l'anneau magnétique ;
- le connecteur comporte en outre au moins deux contacts électriques de puissance reliés à une source d'alimentation du moteur ;
- les contacts électriques comprennent une partie réalisée en laiton ;
- au moins l'un desdits contacts électriques de puissance est disposé pour constituer une partie de l'organe de conduction de flux magnétique ;
- ledit contact de puissance constituant une partie de l'organe de conduction de flux magnétique, est connecté, lorsque le connecteur est fixé sur le moteur, à une plaquette métallique solidaire du moteur et dont une partie s'étend au voisinage de l'anneau magnétique ;
- ledit contact de puissance constituant une partie de l'organe de conduction de flux magnétique est réalisé en acier ;
- l'organe de conduction de flux magnétique est solidaire du contact de puissance ;
- l'organe de conduction de flux magnétique est accolé au contact de puissance ;
- le connecteur est solidaire d'un circuit imprimé sur lequel est disposé le capteur à effet Hall ; et
- le connecteur est adapté pour être fixé de façon détachable sur le moteur électrique.

L'invention vise également un motoréducteur pour accessoires de véhicule automobile, tels qu'une vitre ou un siège, comprenant un arbre de rotor équipé d'un anneau magnétique, caractérisé en ce qu'il comporte un connecteur tel que décrit précédemment.

Des exemples de réalisation de l'invention vont maintenant être décrits en regard des dessins annexés, sur lesquels :
- la Figure 1 est une vue de face en coupe partielle d'un motoréducteur équipé d'un connecteur suivant une première forme de réalisation de l'invention ;
- la Figure 2 est une section schématique suivant la ligne 2-2 de la Figure 1 représentant l'organe de conduction de flux magnétique et l'anneau magnétique ;
- la Figure 3 est une vue analogue à la Figure 1 suivant une deuxième forme de réalisation de l'invention ;
- la Figure 4 est une section analogue à la Figure 2, suivant la ligne 4-4, de la Figure 3 ;
- la Figure 5 est une vue de face en coupe partielle d'une troisième forme de mise en oeuvre de l'invention ;
- la Figure 6 est une vue de côté schématique en coupe de la forme de réalisation de la figure S.

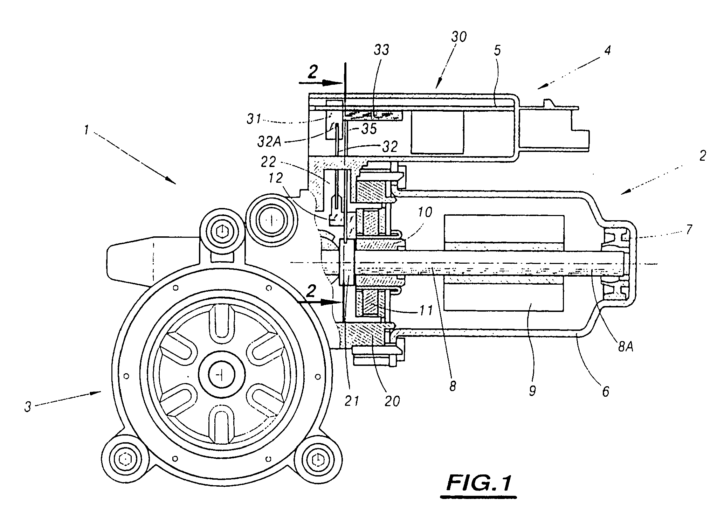

A la Figure 1, on a représenté un motoréducteur 1 essentiellement constitué d'un moteur 2 et d'un réducteur 3, le moteur 2 étant équipé d'un dispositif électronique de commande 4 qui comprend une carte de circuit imprimé 5.

Le moteur 2 comporte un stator 6 formant une enveloppe dans laquelle sont logés des aimants permanents (non représentés), et supportant par l'intermédiaire d'un palier 7 une extrémité 8A d'un arbre 8 d'un rotor 9. Ce dernier comporte de manière connue des enroulements bobinés autour de tôles empilées. Un collecteur 10 est relié électriquement au rotor 9 et reçoit par l'intermédiaire de balais 11 le courant d'alimentation du moteur transmis audit moteur au niveau de cosses d'alimentation 12.

Le motoréducteur 1 comprend d'autre part un carter 20 rigidement fixé au stator 6 et supportant par l'intermédiaire d'un deuxième ensemble de palier, non représenté, la deuxième extrémité de l'arbre de rotor 8. Le tronçon d'arbre de rotor situé du côté de cette deuxième extrémité d'arbre est configuré en tige filetée formant une vis sans fin, qui entraîne un ensemble de pignons du réducteur 3.

Un anneau magnétique 21 est fixé sur l'arbre de rotor 8 dans une région voisine des cosses d'alimentation 12.

Le carter 20 présente une ouverture 22 à proximité des cosses d'alimentation 12, adaptée pour recevoir de façon détachable un connecteur électrique 30 dans lequel est fixée la carte de circuit imprimé 5 du dispositif électronique de commande 4. Cette carte supporte un circuit électronique apte à délivrer un courant d'alimentation du moteur. Le connecteur 30 est maintenu en position par des moyens d'accrochage libérables de type classique, non représentés. Le courant délivré par le circuit électronique transite par des languettes de puissance 31 solidaires de la carte de circuit imprimé 5, chacune desdites languettes 31 étant connectée de façon fixe à une extrémité 32A d'un contact 32 de type "lyre", c'est-à-dire un contact dont une extrémité est constituée par une pince élastique à deux portions de contact symétriques galbées vers l'intérieur.

La carte de circuit imprimé 5 supporte par ailleurs un capteur à effet Hall 33 destiné à recevoir un flux magnétique significatif de la vitesse et/ou de la position de l'arbre de rotor 8 et à transmettre au dispositif électronique de commande 4 un signal électrique significatif de ces paramètres de fonctionnement du moteur.

Le connecteur 30 comprend également un organe 35 de conduction de flux magnétique constitué, dans la variante de l'invention représentée à la Figure 1, de deux broches métalliques parallèles, dont une extrémité est fixée à la carte de circuit imprimé 5 au voisinage du capteur à effet Hall 33. L'autre extrémité 35A constituant l'extrémité libre de la broche 35 se situe, lorsque le connecteur 30 est inséré dans l'ouverture 22 du carter 20 correspondante et maintenu par les moyens d'accrochage, à proximité de la périphérie de l'anneau magnétique 21. Les deux extrémités libres 35A sont de préférence disposées symétriquement par rapport à un plan axial P de l'anneau magnétique 21.

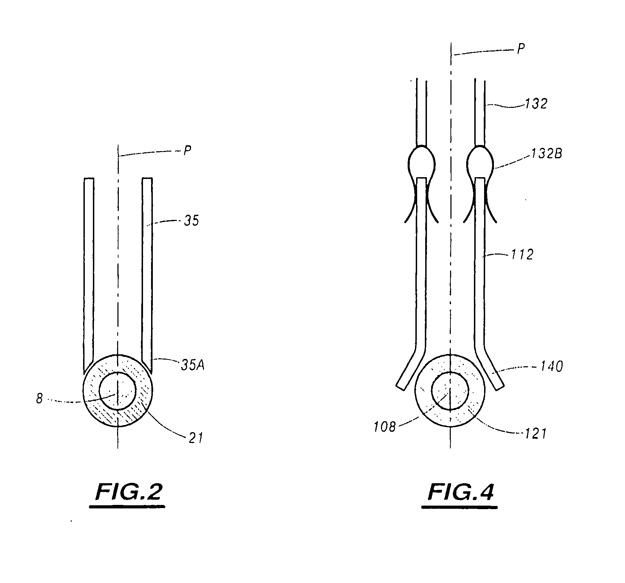

La position relative des broches métalliques 35 et de l'anneau magnétique 21 apparaît plus clairement sur la Figure 2. L'anneau magnétique 21 génère un champ magnétique d'intensité constante dont la direction varie avec la position angulaire de l'arbre de rotor 8, ce qui implique que le flux magnétique conduit par les broches 35 de l'anneau magnétique 21 vers le capteur à effet Hall 33 est fonction de la position angulaire de l'arbre de rotor 8. Le signal électrique délivré par le capteur à effet Hall 33 permet donc d'accéder à la vitesse et/ou à la position angulaire de l'arbre de rotor 8.

De préférence, les broches 35 formant organes de conduction de flux magnétique, sont réalisées en acier.

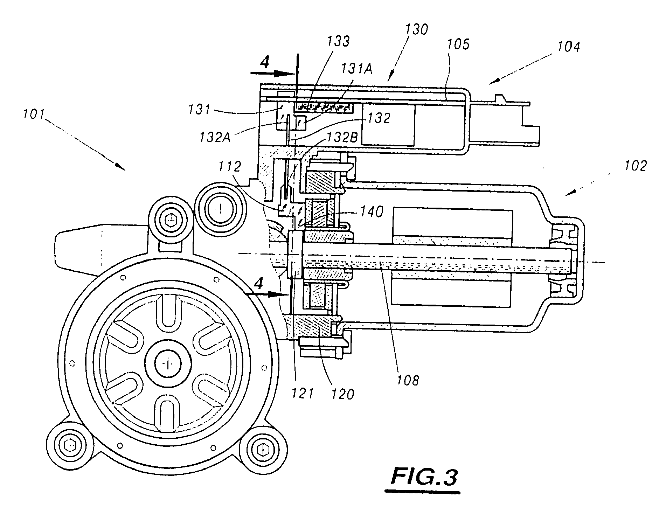

A la Figure 3, on a représenté un motoréducteur 101 de même type que précédemment, dont le moteur 102 comprend un arbre de rotor 108 sur lequel est monté fixe un anneau magnétique 121. Un connecteur 130 comporte une carte de circuit imprimé 105 faisant partie d'un dispositif électronique de commande 104 du moteur électrique 102 et supportant une paire de languettes d'alimentation 131 situées à proximité d'un capteur à effet Hall 133. Le connecteur est fixé de façon détachable au carter 120 du motoréducteur 101 par des moyens d'accrochage libérables classiques non représentés. Le connecteur 130 comporte des contacts 132 de type "lyre", fixés par une de leurs extrémités 132A aux languettes 131 et destinés à être connectés par leur seconde extrémité 132B à des cosses 112 d'alimentation du moteur.

Dans cette variante de l'invention, et comme il sera mieux vu à la Figure 4, les deux cosses 112 présentent chacune une partie 140 de recouvrement de l'anneau magnétique 121, oblique par rapport à la direction d'accouplement des contacts 132, et qui s'étend au voisinage de l'anneau magnétique 121 de façon quasiment tangentielle. Ces deux parties 140 sont de préférence symétriques par rapport au plan axial P de l'anneau 121. De même, les languettes 131 comportent une partie 131 A recouvrant partiellement le capteur à effet Hall 133, de telle sorte que les cosses 112, les contacts 132 et les languettes 131 remplissent la fonction de concentrateur de flux et constituent un organe de conduction du flux magnétique de l'anneau magnétique 121 vers le capteur à effet Hall 133.

De préférence, les contacts 132 sont réalisés en acier, un matériau de ce type offrant un compromis acceptable entre les qualités de conduction électrique et magnétique, et disposant d'excellentes propriétés mécaniques.

On comprend aisément que les deux variantes de l'invention qui viennent d'être décrites permettent de concevoir des motoréducteurs à haut degré de standardisation. En effet, il n'est pas nécessaire de solidariser une carte de circuit imprimé portant un capteur à effet Hall au moteur pour réaliser les fonctions de capteur de position et/ou de vitesse, et donc de modifier le carter d'un mateur standard. Ainsi, un même moteur peut être utilisé quelle que soit l'application du motoréducteur, et quel que soit le type de capteur requis (vitesse/position), seul le connecteur devant être modifié.

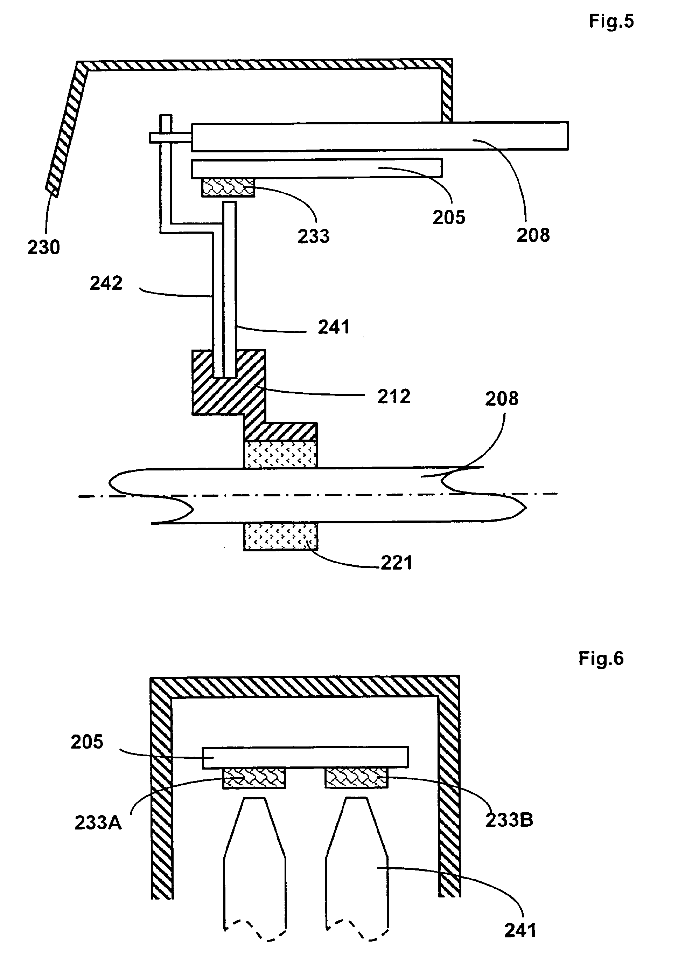

Les figures 5 et 6 représentent un motoréducteur selon un troisième mode de réalisation de l'invention. Un connecteur 230, représenté seulement partiellement, comprend, comme dans les autres mode de réalisation, une carte de circuit imprimé 205. La carte de circuit imprimé 205 supporte un capteur à effet Hall 233.

Des broches 241 de conduction de flux magnétique présentent chacune une extrémité proche d'une partie de capteur à effet Hall 233A et 233B respectivement. L'autre extrémité des broches peut par exemple venir en contact d'une cosse 212 respective. Comme dans le mode de réalisation de la figure 3, les cosses 212 servent à alimenter l'anneau magnétique 221 monté sur le rotor 208. Le flux magnétique de l'anneau magnétique peut ainsi être conduit de l'anneau 221 jusqu'au capteur à effet Hall 233.

Comme représenté à la figure 6, les broches 241 de conduction de flux magnétique présentent une partie allongée. Cette partie allongée présente une extrémité voisine du capteur 233 de section réduite, c'est-à-dire de section inférieure à la section moyenne de la partie allongée. Cette section réduite peut par exemple être obtenue en utilisant des broches plates, de largeur réduite au niveau de cette extrémité. Cette section réduite permet de concentrer le flux magnétique au niveau de la sonde à effet Hall 233. L'amplitude du flux magnétique conduit par les broches 241 jusqu'à la sonde à effet Hall 233 est ainsi accrue. Des broches de section réduite similaires peuvent bien entendu être utilisées dans les précédents mode de réalisation de l'invention.

On utilise de préférence des broches dont la section décroît régulièrement en se rapprochant de la sonde à effet Hall. On réduit ainsi les pertes de flux à proximité de la sonde à effet hall.

Les broches 241 sont de préférence réalisées en fer doux, en acier, en nickel ou en ferrite. On utilise de manière générale un matériau présentant une perméabilité magnétique élevée.

Selon une variante, des languettes d'alimentation 242 relient électriquement un faisceau électrique d'alimentation 208 aux cosses 212. Ces languettes 242 sont de préférence réalisées en cuivre ou en laiton pour assurer une conduction élevée du courant électrique entre le faisceau d'alimentation 208 et les cosses 212.

Les languettes 242 et les broches 241 peuvent être fixées au même niveau des cosses 212. Chaque languette peut également être assemblée à une broche, par exemple par soudage, par collage ou encore par rivetage. On peut également utiliser d'autres moyens de fixation mécanique ou simplement empiler une languette sur une broche en les maintenant par leurs extrémités respectives.

L'invention, qui permet de conduire une information magnétique vers un capteur déporté, rend une configuration de motoréducteur unique adaptable à diverses applications, la standardisation du motoréducteur étant compensée par la diversification de la connectique, ce qui procure une économie considérable sur le système complet.

## Revendications

1. Connecteur pour moteur électrique, ledit moteur comportant un anneau magnétique (21 ; 121) qui est le siège d'un champ magnétique lié à des paramètres de fonctionnement du moteur, **caractérisé en ce qu'**il comporte :
- un organe (35, 112, 131, 132) de conduction de flux magnétique :
- formant concentrateur de flux interposé, lorsque le connecteur (30 ; 130) est fixé sur le moteur (2 ; 102), entre l'anneau magnétique (21 ; 121) et un capteur à effet Hall (33 ; 133) adapté pour mesurer le flux magnétique conduit par l'organe (35, 112, 131, 132) de conduction de flux magnétique ;
- présentant :
- une partie allongée ;-une extrémité de la partie allongée présentant une section inférieure à la section moyenne de la partie allongée, voisine du capteur à effet Hall.
- au moins deux contacts électriques de puissance (32 ; 132) reliés à une source d'alimentation du moteur (2 ; 102), au moins l'un desdits contacts électriques de puissance (132) est disposé pour constituer une partie de l'organe (112, 131, 132) de conduction de flux magnétique.

2. Connecteur pour moteur électrique suivant la revendication 1, **caractérisé en ce que** la section de ladite extrémité décroît régulièrement au voisinage du capteur à effet Hall.

3. Connecteur pour moteur électrique suivant la revendication 1 ou 2, **caractérisé en ce que** la partie allongée de l'organe de conduction de flux magnétique est réalisée en acier doux.

4. Connecteur pour moteur électrique suivant l'une des revendications précédentes, **caractérisé en ce que** l'organe (35, 112, 131, 132) de conduction de flux magnétique comporte au moins une broche métallique (35 ; 132) adaptée pour qu'une partie (35A ; 132B) de ladite broche, lorsque le connecteur (30 ; 130) est fixé sur le moteur (2 ; 102), s'étende au voisinage de l'anneau magnétique (21 ; 121).

5. Connecteur pour moteur électrique suivant la revendication 4, **caractérisé en ce que** l'organe de conduction de flux magnétique comporte deux broches métalliques (35) dont les extrémités libres (35A) sont disposées symétriquement par rapport à un plan axial (P) de l'anneau magnétique (21).

6. Connecteur pour moteur électrique suivant l'une des revendications précédentes, **caractérisé en ce que** les contacts électriques comprennent une partie réalisée en laiton.

7. Connecteur pour moteur électrique suivant l'une des revendications précédentes, **caractérisé en ce que** ledit contact de puissance (132) constituant une partie de l'organe (112, 131, 132) de conduction de flux magnétique, est connecté, lorsque le connecteur (130) est fixé sur le moteur (102), à une plaquette métallique (112) solidaire du moteur (102) et dont une partie (140) s'étend au voisinage de l'anneau magnétique (121).

8. Connecteur suivant l'une des revendications précédentes, **caractérisé en ce que** ledit contact de puissance (132) constituant une partie de l'organe (112, 131, 132) de conduction de flux magnétique est réalisé en acier.

9. Connecteur pour moteur électrique suivant l'une quelconque des revendications 4 à 8, **caractérisé en ce que** l'organe de conduction de flux magnétique est solidaire du contact de puissance.

10. Connecteur pour moteur électrique suivant l'une quelconque des revendications 4 à 9, **caractérisé en ce que** l'organe de conduction de flux magnétique est accolé au contact de puissance.

11. Connecteur pour moteur électrique suivant l'une quelconque des revendications précédentes, **caractérisé en ce que** le connecteur (30 ; 130) est solidaire d'un circuit imprimé (5, 105) sur lequel est disposé le capteur à effet Hall (33 ; 133).

12. Connecteur pour moteur électrique suivant l'une quelconque des revendications précédentes, **caractérisé en ce qu'**il est adapté pour être fixé de façon détachable sur le moteur électrique (2 ; 102).

13. Motoréducteur pour accessoires de véhicules automobiles, tels qu'une vitre, un siège ou un toit-ouvrant, comprenant un arbre de rotor (8 ; 108) équipé d'un anneau magnétique (21 ; 121), **caractérisé en ce qu'**il comporte un connecteur (30 ; 130) selon l'une quelconque des revendications précédentes.

## Claims

1. A connector for an electric motor, said motor comprising a magnetic ring (21; 121) which is the seat of a magnetic field linked to operating parameters of the motor, **characterized in that** it comprises:
- a magnetic flux conduction member (35, 112, 131, 132)
- forming a flux concentrator interposed, when the connector (30; 130) is fixed on the motor (2; 102), between the magnetic ring (21; 121) and a Hall-effect sensor (33; 133) adapted so as to measure the magnetic flux conducted by the magnetic flux conduction member (35, 112, 131, 132);
- presenting:
- an elongated part;
- an end of the elongated part exhibiting a smaller section than the mean section of the elongated part, neighboring the Hall-effect sensor.
- at least two electrical power contacts (32; 132) linked to a supply source of the motor (2; 102), at least one of said electrical power contacts (132) is disposed so as to constitute a part of the magnetic flux conduction member (112, 131, 132).

2. The connector for an electric motor according to claim 1, **characterized in that** the section of said end decreases progressively in the neighborhood of the Hall-effect sensor.

3. The connector for an electric motor according to claim 1 or 2, **characterized in that** the elongated part of the magnetic flux conduction member is made of soft steel.

4. The connector for an electric motor according to one of the preceding claims, **characterized in that** the magnetic flux conduction member (35, 112, 131, 132) comprises at least one metal pin (35; 132) adapted so that a part (35A; 132B) of said pin, when the connector (30; 130) is fixed on the motor (2; 102), lies in the vicinity of the magnetic ring (21; 121).

5. The connector for an electric motor according to claim 4, **characterized in that** the magnetic flux conduction member comprises two metal pins (35) whose free ends (35A) are disposed symmetrically with respect to an axial plane (P) of the magnetic ring (21).

6. The connector for an electric motor according to one of the preceding claims, **characterized in that** the electrical contacts comprise a part made of brass.

7. The connector for an electric motor according to one of the preceding claims, **characterized in that** said power contact (132) constituting a part of the magnetic flux conduction member (112, 131, 132) is connected, when the connector (130) is fixed on the motor (102), to a metal plate (112) integral with the motor (102) and a part (140) of which lies in the vicinity of the magnetic ring (121).

8. The connector according one of the preceding claims, **characterized in that** said power contact (132) constituting a part of the magnetic flux conduction member (112, 131, 132) is made of steel.

9. The connector for an electric motor according to any one of claims 4 to 8, **characterized in that** the magnetic flux conduction member is integral with the power contact.

10. The connector for an electric motor according to any one of claims 4 to 9, **characterized in that** the magnetic flux conduction member is placed side by side to the power contact.

11. The connector for an electric motor according to any one of the preceding claims, **characterized in that** the connector (30; 130) is integral with a printed circuit (5, 105) on which the Hall-effect sensor (33; 133) is disposed.

12. The connector for an electric motor according to any one of the preceding claims, **characterized in that** it is adapted so as to be fixed in a detachable manner on the electric motor (2; 102).

13. A geared motor for automobile vehicle accessories, such as a window, a seat or a sunroof, comprising a rotor shaft (8; 108) equipped with a magnetic ring (21; 121), **characterized in that** it comprises a connector (30; 130) according to any one of the preceding claims.

## Patentansprüche

1. Verbindungsstück für einen Elektromotor, wobei der Motor einen Magnetring (21; 121) umfasst, welcher der Sitz eines Magnetfelds ist, das mit Betriebsparametern des Motors zusammenhängt, **dadurch gekennzeichnet, dass** es folgendes umfasst:
- ein Organ (35, 112, 131, 132) zum Leiten eines Magnetflusses:
- das einen zwischengeschalteten Flusskonzentrator bildet, wenn das Verbindungsstück (30; 130) am Motor (2; 102) befestigt ist, zwischen dem Magnetring (21; 121) und einem Halleffekt-Sensor (33; 133), der dazu geeignet ist, den von dem Organ (35, 112, 131, 132) zum Leiten des Magnetflusses geleiteten Magnetfluss zu messen;
- das folgendes aufweist:
- einen länglichen Teil; wobei ein Ende des länglichen Teils einen Abschnitt unterhalb des mittleren Abschnitts des länglichen Teils neben dem Halleffekt-Sensor aufweist.
- mindestens zwei elektrische Leistungskontakte (32; 132), die mit einer Stromversorgungsquelle des Motors (2; 102) verbunden sind, wobei mindestens einer der elektrischen Leistungskontakte (132) angeordnet ist, um einen Teil des Organs (112, 131, 132) zum Leiten des Magnetflusses zu bilden.

2. Verbindungsstück für einen Elektromotor nach Anspruch 1, **dadurch gekennzeichnet, dass** der Abschnitt des Endes in der Nähe des Halleffekt-Sensors regelmäßig abnimmt.

3. Verbindungsstück für einen Elektromotor nach Anspruch 1 oder 2, **dadurch gekennzeichnet, dass** der längliche Teil des Organs zum Leiten des Magnetflusses aus Weichstahl ausgebildet ist.

4. Verbindungsstück für einen Elektromotor nach einem der vorhergehenden Ansprüche, **dadurch gekennzeichnet, dass** das Organ (35, 112, 131, 132) zum Leiten des Magnetflusses mindestens einen Metallstift (35; 132) umfasst, der dazu geeignet ist, dass ein Teil (35A; 132B) des Stifts, wenn das Verbindungsstück (30; 130) am Motor (2; 102) befestigt ist, sich in die Nähe des Magnetrings (21; 121) erstreckt.

5. Verbindungsstück für einen Elektromotor nach Anspruch 4, **dadurch gekennzeichnet, dass** das Organ zum Leiten des Magnetflusses zwei Metallstifte (35) umfasst, deren freie Enden (35A) im Verhältnis zu einer Axialebene (P) des Magnetrings (21) symmetrisch angeordnet sind.

6. Verbindungsstück für einen Elektromotor nach einem der vorhergehenden Ansprüche, **dadurch gekennzeichnet, dass** die elektrischen Kontakte einen aus Messing ausgebildeten Teil umfassen.

7. Verbindungsstück für einen Elektromotor nach einem der vorhergehenden Ansprüche, **dadurch gekennzeichnet, dass** der Leistungskontakt (132), der einen Teil des Organs (112, 131, 132) zum Leiten des Magnetflusses bildet, wenn das Verbindungsstück (130) am Motor (102) befestigt ist, an ein Metallplättchen (112) angeschlossen ist, das mit dem Motor (102) einstückig ist und dessen einer Teil (140) sich bis in die Nähe des Magnetrings (121) erstreckt.

8. Verbindungsstück nach einem der vorhergehenden Ansprüche, **dadurch gekennzeichnet, dass** der Leistungskontakt (132), der einen Teil des Organs (112, 131, 132) zum Leiten des Magnetflusses bildet, aus Stahl ausgebildet ist.

9. Verbindungsstück für einen Elektromotor nach einem der Ansprüche 4 bis 8, **dadurch gekennzeichnet, dass** das Organ zum Leiten des Magnetflusses mit dem Leistungskontakt einstückig ist.

10. Verbindungsstück für einen Elektromotor nach einem der Ansprüche 4 bis 9, **dadurch gekennzeichnet, dass** das Organ zum Leiten des Magnetflusses an den Leistungskontakt angefügt ist.

11. Verbindungsstück für einen Elektromotor nach einem der vorhergehenden Ansprüche, **dadurch gekennzeichnet, dass** das Verbindungsstück (30; 130) mit einer gedruckten Schaltung (5, 105) einstückig ist, auf welcher der Halleffekt-Sensor (33; 133) angeordnet ist.

12. Verbindungsstück für einen Elektromotor nach einem der vorhergehenden Ansprüche, **dadurch gekennzeichnet, dass** es geeignet ist, um abnehmbar auf dem Elektromotor (2; 102) befestigt zu werden.

13. Getriebemotor für Fahrzeugausstattung, wie etwa eine Scheibe, ein Sitz oder ein Schiebedach, umfassend eine Laufradwelle (8; 108), die mit einem Magnetring (21; 121) ausgestattet ist, **dadurch gekennzeichnet, dass** er ein Verbindungsstück (30; 130) nach einem der vorhergehenden Ansprüche umfasst.
